# EUROPEAN PATENT APPLICATION

(11) **EP 1 191 785 A1**
(43) Date of publication of application: **27.03.2002**
(21) Application number: 00120656.4
(22) Date of filing: 21.09.2000
(51) Int. Cl.: H04N 5/44

(54) **Interlace to progresssive conversion**

(71) Applicant: Sony International (Europe) GmbH, 10785 Berlin (DE)
(72) Inventor: Unruh, Christian, c/o Adv. Techn. Center Stuttgart, 70327 Stuttgart (DE); Erdler, Oliver, c/o Adv. Techn. Center Stuttgart, 70327 Stuttgart (DE); Wagner, Peter, c/o Adv. Techn. Center Stuttgart, 70327 Stuttgart (DE); Schwendowius, Jörg, c/o Adv.Techn.Center Stuttgart, 70327 Stuttgart (DE)
(74) Representative: Müller . Hoffmann & Partner Patentanwälte

(57) **Abstract**

Interlace to progressive conversion methods are used to interpolate the missing lines in an interlaced video signal. The method provided by the present invention chooses input values of a median filter process according to a result of a pixel matching process detecting a spatial orientation in the pixels surrounding the pixel to be interpolated. The main advantage thereof is that artifacts due to geometrical elements of the video signal source fields which are slanted towards the horizontal and/or vertical axis can be avoided.

## Description

The invention relates to a method of performing interlace to progressive conversion of video signal source fields on a pixel by pixel basis.

Interlace to progressive conversion (IPC or I2P) of video signal source fields is known in the art. It refers to the problem of interpolating the missing lines in interlaced video signal source fields by use of signal filtering algorithms like signal interpolation algorithms to generate a progressive signal containing the missing lines.

Several different kinds of I2P-methods are known. Document EP 0 564 957 B1 for example discloses an I2P-method which uses two consecutive 3-tap median filters, wherein the second median filter uses a result of the first median filter as input value.

Document US 5,442,404 discloses an I2P-method which uses a two-dimensional linear pseudo-median filtering operation and an edge pattern of a video signal to interpolate missing lines.

It is an object of the present invention to provide a further I2P-method which shows good progressive signals.

To solve this object, the present invention provides a method of performing interlace to progressive conversion of video signal source fields on a pixel by pixel basis, which is characterized by choosing input values of a rank order filter process according to a result of a pixel matching process.

Further preferred embodiments of this method according to the present invention defined in independent claim 1 are described in the subclaims.

An important aspect of the invention is that geometrical characteristics of graphical elements like lines, edges, circles, squares, etc. contained in the video signal source fields are taken into account by the pixel matching process when determining the input values of the succeeding rank order filter process. This means that a change of the geometrical characteristics of the graphical elements generally results in a change of the input values of the rank order filter process, since the change of the geometrical characteristics is detected by the pixel matching process.

A rank order filter is a filter which yields as an output value one of the input values of the rank order filter, wherein the output value is choosen according to an comparing process between the input values.

The input values of the rank order filter process are derived by the pixel matching process from pixel values of pixels surrounding the pixel to be determined. To find out which pixel values of respective pixels surrounding the pixel to be determined are suitable as input values for the rank order filter process, the pixel matching process detects the strength of correlation between the surrounding pixels by comparing the pixel values of the surrounding pixels with each other. Preferably, pixel values of surrounding pixels which, compared to the rest of the surrounding pixel values, show a minimum of difference between each other, and thus show a maximum correlation between each other, are used as imput values. In a preferred embodiment, the geometrical positions of the pixels corresponding to the input values preferably show a symmetry with respect to the pixel to be determined, which for example means that a line connecting two input values also connects the pixel to be determined, which is located in the middle of the line. This line can be understood as a direction of highest correlation. In this embodiment, preferably only pixel values of pixels being immediately adjacent to the pixel to be determined are used as input values. However, the present invention is not limited thereto, and any pixel value or any group of pixel values of surrounding pixels contained in the video signal source fields (in the following only source fields) may be used as input values.

In the above paragraph, the strength of correlation between the spatially surrounding pixels was obtained by directly using differences of pixel values as a correlation criteria. Alternatively, it is also possible to use error criteria, for example a calculation of summed square errors (SSE), or a normalized cross correlation function (NCCF), as a correlation criteria. This means that an error criteria is minimized to find out the correlation between spatially surrounding pixels.

The pixel matching process described above provides a very flexible method of detecting spatial orientations of arbitrary geometrical elements. Further, the applied rank order filter process shows noise reduction capabilities, especially spot noise reduction capabilities. These capabilities are supported by the pixel matching process: As mentioned in the preferred embodiment above, a first pixel value of a first pixel within the surrounding pixels of the pixel to be determined is preferably used as input value only if a second pixel value of a second pixel is found within the surrounding pixels which differs only slightly from the first pixel value, compared to the rest of the surrounding pixel values. However, since for the first pixel value which strongly differs from the surrounding pixel values (spot noise) no corresponding pixel value will be found by the pixel matching process, the input value will not be emphasized by using it twice for the rank order filter process. Therefore, the spot noise is reduced.

Taking into account the above said, the pixel matching process is capable of detecting for example lines or edges contained in the source fields being slanted towards the vertical and/or the horizontal axis of the source fields. Normally, such slanted lines or edges show only poor quality in the progressive mode, as far as smoothness is concerned. Such smoothness artifacts of progressive signals are known as the so-called staircase-effect, which disturbs the visual impression of a corresponding image significantly.

However, according to the present invention, if pixels to be determined by an I2P-process are contained within graphical elements of the source fields which are slanted towards the horizontal and/or the vertical axis, the pixel matching process determines the pixel input values of the rank order filter process so that reduced staircase-artifacts occur, i. e. reduced resolution results of progressive images can be prevented.

An advantage of the present invention is that preferred filter algorithms which are used in the rank order filter process and in the pixel matching process according to the present invention, and which will be discussed in detail later, show only low algorithm complexity, which means that computational power can be saved in comparison to algorithms used within prior art I2P converters.

Preferably, spatial and/or temporal pixel values are used as input values of the rank order filter process and/or of the pixel matching process. A spatial pixel value denotes a pixel value belonging to the same source field also containing the pixel to be determined. A temporal pixel value denotes a pixel value of a source field being different from that source field containing the pixel to be determined. Preferably, the temporal pixel values show the same spatial coordinates as the pixel to be determined. The use of both spatial and temporal pixel values as input values of the rank order filter process and/or of the pixel matching process has the advantage that the progressive signal shows good quality with respect to static images and moving images. That is, good results are achieved with respect to moving edges as well as to static resolution and moving sequences.

Preferably, non-linear 5-tap or 3-tap median filters are used within the rank order filter process. An advantage of using median filters is that the output of those filters is an input value and not a computed value. This results, when combinig it with the pixel matching process as described above, in a motion adaptive filter property. Also, as already meantioned, a noise reduction property is present, due to the rank order property. A further example of a possible rank order filter is given by a pseudo-median filters.

However, the pixel matching process may also be combined with other filters than rank order filters, for example linear FIR filters. In this sense, the pixel matching process serves as an input value selection method extending a static filter to be picture content adaptive.

Further features and advantages of the present invention will become apparent from the following detailed description of preferred embodiments thereof taken in conjunction with the accompanying drawings, wherein:
- **Fig. 1**: shows a schematic drawing of a part of a source field including the spatial positions of pixels which are used as input values of the pixel matching process.
- **Fig. 2**: shows a schematic drawing with different parts of different source fields to demonstrate which pixels are used as input values for the rank order filter process.
- **Figs. 3, 4**: show a schematic drawing of a part of a source field including the spatial positions of pixel groups which are used as input values in a further preferred embodiment of the pixel matching process, respectively.

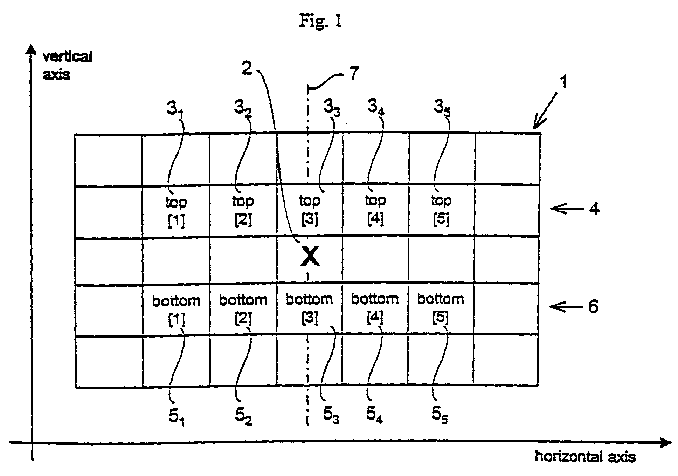

In the following description, making reference to Fig. 1, a preferred embodiment of the present invention will be explained.

In this embodiment, a median filter process and a pixel matching process comprise the following algorithm:
X = MM3(top[1], bottom[1], top[2], bottom[2], top[3], bottom[3], top[4], bottom[4], top[5], bottom[5]),
wherein the function MM3(a[1], b[1], a[2], b[2], a[3], b[3], a[4], b[4], a[5], b[5]) is given by:
a) MM3(...) = Median(a[3], b[3], 0.5 · (a[2]+b[4]) if D1 = min(D1, D2, D3)
b) MM3(...) = Median(a[3], b[3], 0.5 · (a[3]+b[3]) if D2 = min(D1, D2, D3)
c) MM3(...) = Median(a[3], b[3], 0.5 · (a[4]+b[2]) if D3 = min(D1, D2, D3)
with
d) D1 = |a[1]-b[3]| + |a[2]-b[4]| + |a[3]-b[5]|
e) D2 = |a[2]-b[2]| + |a[3]-b[3]| + |a[4]-b[4]|
f) D3 = |a[3]-b[1]| + |a[4]-b[2]| + |a[5]-b[3]|.

A source field 1 comprises a pixel X 2 to be determined. Top[1] to top[5] 3₁ to 3₅ are pixel values of pixels being located in the same temporal source field 1 as that of the pixel corresponding to X 2, but being located in a single video signal source line 4 above the pixel corresponding to X 2. Bottom[1] to bottom[5] 5₁ to 5₅ are pixel values of pixels being located in the same temporal source field 1 as that of the pixel corresponding to X 2, but being located in a single video signal source line 6 below the pixel corresponding to X 2. Top[ 1] to top[5] 3₁ to 3₅ and bottom[1] to bottom[5] 5₁ to 5₅ are centered in top[3] 3₃ and bottom[3] 5₃, respectively. Preferably, top[3] 3₃ and bottom[3] 5₃ are connectable via a single column line 7 which also connects the pixel corresponding to X 2, and which is preferably parallel to the vertical axis of the source field 1. "Top[1] to top[5] are centered in top[3]", for example, means that the pixel values top[1] 3₁, top[2] 3₂, top[4] 3₄ and top[5] 3₅ are grouped around top[3] 3₃ in a symmetrical way, top[3] 3₃ being the symmetrical center. Preferably, top[1] to top[5] 3₁ to 3₅ and bottom[1] to bottom[5] 5₁ to 5₅ are located immediately beneath each other, respectively.

In the embodiment described above, roughly spoken, equations a) to c) correspond to the median filter process, wherein equations d) to f) correspond to the pixel matching process.

In detail, the pixel matching process assigns in a first step the pixel values of the pixels which surround the pixel to be determined to pixel groups of preferably two pixels, respectively, which correspond to respective predetermined spatial orientations. For example, in equation e), a[2] and b[2] define a pixel group corresponding to the vertical direction. a[1] and b[3] in equation d), for example, define a pixel group corresponding to a slanted direction, i. e. a falling line. Then, in a second step, one single pixel group is selected (see equations a) to c)), and the pixel values contained therein are used as input values. For example, the pixel values of pixel group defined by a[2] and b[4] are selected in equation a) and used as input values. The selection process of the pixel group is based upon a respective subtraction process of the pixel values contained in a group (see equations d), e) and f)), and a respective summing process of the calculated subtraction results of all groups having the same spatial orientation, respectively (each of equations d), e) and f) corresponds to a summing process). This means, that for all groups corresponding to a specified spatial orientation, a different sum is calculated, respectively. The different sums are compared with each other to find out a minimum of the sums (see equations a) to c)), and according to this minimum of the sums the pixel group described above is selected (to each sum corresponds one pixel group to be used as input values).

Preferably, each of the pixel values top[1] to top[5] 3₁ to 3₅ corresponds to one of the pixel values bottom[1] to bottom [5] 5₁ to 5₅, and a connecting line of such two respective pixel values is parallel to the vertical axis of the source field 1, respectively.

An advantage of the 3-tap median filter is the high quality in motion scenes, because it derives the input values only from the the spatial domain, i. e. from one single source field.

In the following description, a further preferred embodiment of a combination of a median filter process and a pixel matching process is given, which is constituted by the following algorithm:
N = MM5(top[1], bottom[1], top[2], bottom[2], top[3], bottom[3], top[4], bottom[4], top[5], bottom[5], prev, next),
wherein the function MM5(a[1], b[1], a[2], b[2], a[3], b[3], a[4], b[4], a[5], b[5], prev, next) is given by:
a) MM5(...) = Median(prev, next, a[3], b[3], 0.5 · (a[2]+b[4]) if D1 = min(D1, D2, D3)
b) MM5(...) = Median(prev, next, a[3], b[3], 0.5 · (a[3]+b[3]) if D2 = min(D1, D2, D3)
c) MM5(...) = Median(prev, next, a[3], b[3), 0.5 · (a[4]+b[2]) if D3 = min(D1, D2, D3),
with
d) D1 = |a[1]-b[3]| + |a[2]-b[4]| + |a[3]-b[5]|
e) D2 = |a[2]-b[2]| + |a[3]-b[3]| + |a[4]-b[4]|
f) D3 = |a[3]-b[1]| + |a[4]-b[2]| + |a[5]-b[3]|.

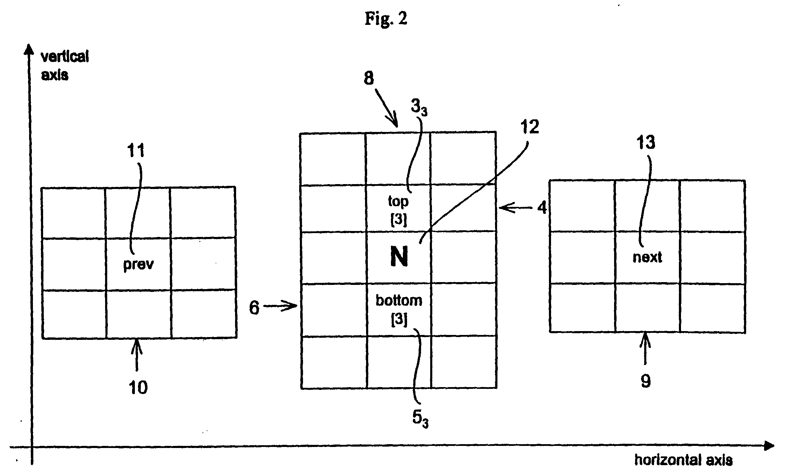

Referring to Fig. 1 and 2, three different temporal source fields 8, 9, 10 are given, wherein pixel value prev 11, pixel value N 12 and pixel value next 13 denote pixel values which all have the same spatial coordinates.

The pixel value of pixel N 12 denotes the pixel value to be determined. Top[1] to top[5] 3₁ to 3₅ are pixel values of pixels being located in the same temporal source field 8 as that of the pixel corresponding to N 12, but being located in a single video signal source line 4 above the pixel corresponding to N 12. Bottom[1] to bottom[5] 5₁ to 5₅ are pixel values of pixels being located in the same temporal source field 8 as that of the pixel corresponding to N 12, but being located in a single video signal source line 6 below the pixel corresponding to N 12. Top[1] to top[5] 3₁ to 3₅ and bottom[1] to bottom[5] 5₁ to 5₅ are centered in top[3] 3₃ and bottom[3] 5₃ , respectively, wherein top[3] 3₃ and bottom[3] 5₃ are connectable via a single column line 7 which also includes the pixel corresponding to N 12, and which is preferably parallel to the vertical axis of source field 8. Preferably, each of the pixel values top[1] to top[5] 3₁ to 3₅ corresponds to one of the pixel values bottom[1] to bottom [5] 5₁ to 5₅, and a connecting line of such two respective pixel values is parallel to the vertical axis of the source field 8, respectively.

Prev 11 is a pixel having the same spatial coordinates as those of the pixel corresponding to N 12, and is located in source field 10 temporarily preceding that which contains the pixel corresponding to N 12. Preferably, prev 11 is located in a source field 10 temporarily immediately preceding that which contains the pixel corresponding to N 12. Next 13 is a pixel having the same spatial coordinates as those of the pixel corresponding to N 12, and is located in a source field 9 temporarily succeeding that which contains the pixel corresponding to N 12. Preferably, next 13 is located in a source field 9 temporarily immediately succeeding that which contains the pixel corresponding to N 12.

An advantage of using the 5-tap median filter is a good quality in portrayal of still pictures as well as in moving sequences.

The pixel matching process in this embodiment is carried out in the same way as in the first embodiment, the difference between the first and the second embodiment are different median filters and the additional temporal input values prev 11 and next 13, which ensure good static images in the progressive mode.

The function Median(arguments) is known by those skilled in the art, and is therefore not further explained here.

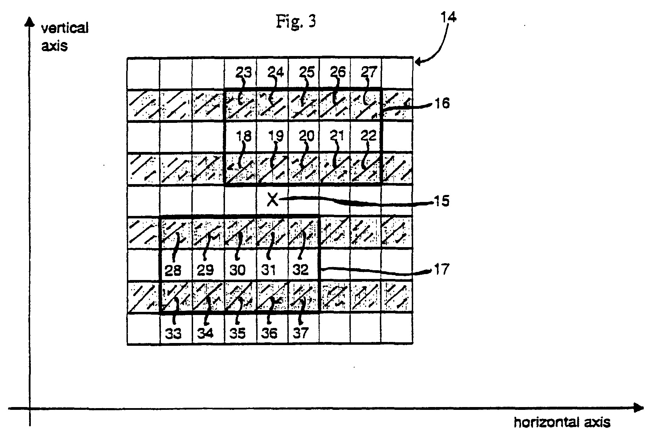

Referring to Fig. 3, a further example of possible groups of pixels whose corresponding pixel values are used by the pixel matching process or as input values for the rank order filter process will be given.

A source field 14 comprises a pixel X 15 to be determined. Two enlarged groups of pixels 16, 17 are used, which are shifted with respect to each other towards the horizontal direction. The pixels 18 to 27 of the first pixel group 16 and the pixels 28 to 37 of the second pixel group 17 are possible pixels to be used in the pixel matching process. For example, the pixel value of pixels 19, 20, 30 nd 31 may serve as pixel values to calculate the pixel value of pixel X 15.

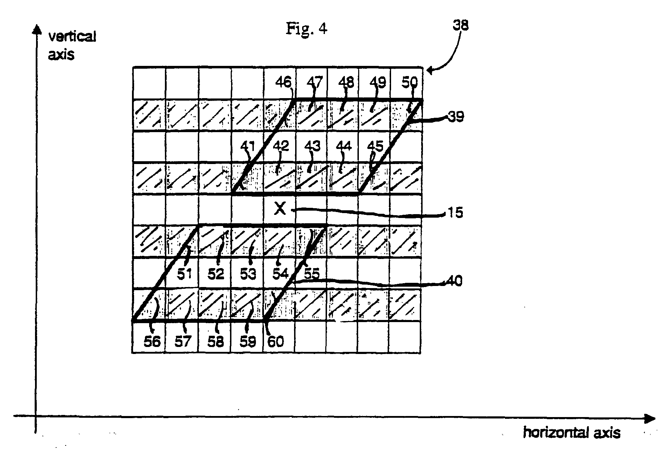

Referring to Fig. 4, a further example of possible groups of pixels whose corresponding pixel values are used by the pixel matching process or as input values for the rank order filter process will be given.

A source field 38 comprises a pixel X 15 to be determined. Two enlarged groups of pixels 39, 40 are used, which are shifted with respect to each other towards the horizontal direction, each group 39, 40 being a sheared block of pixels. The pixels 41 to 50 of the first pixel group 39 and the pixels 51 to 60 of the second pixel group 40 are possible pixels to be used in the pixel matching process. For example, the pixel value of pixels 41, 49, 53 and 55 may serve as pixel values to caluculate the pixel value of pixel X 15.

## Claims

1. Method of performing interlace to progressive conversion of video signal source fields on a pixel by pixel basis, **characterized by** choosing input values of a rank order filter process according to a result of a pixel matching process.

2. Method according to claim 1, **characterized in that** said pixel matching process detects a spatial orientation of at least one graphical element within said video signal source fields, said graphical element containing at least one pixel to be interpolated.

3. Method according to claim 2, **characterized in that** said detecting of said spatial orientation of said at least one graphical element is based on detecting a strength of correlation between pixels surrounding said at least one pixel to be interpolated.

4. Method according to claim 3, **characterized in that** said detecting of said strength of correlation between said pixels surrounding said at least one pixel to be interpolated is based on a summing process of absolute differences between said pixel values of said pixels surrounding said at least one pixel to be interpolated.

5. Method according to anyone of the preceding claims, **characterized by** determining spatial and/or temporal pixel values as said input values of said rank order filter and/or input values of said pixel matching process.

6. Method according to anyone of the preceding claims, **characterized in that** said rank order filter process uses median filters or pseudo-median filters.

7. Method according to claim 6, **characterized in that** said median filter process uses five tap median filters or three tap median filters.

8. Method according to claim 7, **characterized in that** said median filter process and said pixel matching process are given by the following algorithm:
X = MM3(top[1], bottom[1], top[2], bottom[2], top[3], bottom[3], top[4], bottom[4], top[5], bottom[5]),
wherein the function MM3(a[1], b[1], a[2], b[2], a[3], b[3], a[4], b[4], a[5], b[5]) is given by:
a) MM3(...) = Median(a[3], b[3], 0.5 · (a[2]+b[4]) if D1 = min(D1, D2, D3)
b) MM3(...) = Median(a[3], b[3], 0.5 · (a[3]+b[3]) if D2 = min(D1, D2, D3)
c) MM3(...) = Median(a[3], b[3], 0.5 · (a[4]+b[2]) if D3 = min(D1, D2, D3),
with
d) D1 = |a[1]-b[3]| + |a[2]-b[4]| + |a[3]-b[5]|
e) D2 = |a[2]-b[2]| + |a[3]-b[3]| + |a[4]-b[4]|
f) D3 = |a[3]-b[1]| + |a[4]-b[2]| + |a[5]-b[3]|,
wherein X (2) is a pixel value of a pixel to be determined, top[1] to top[5] (3₁ to 3₅) are pixel values of pixel being located in the same temporal video signal source field (1) as that of said pixel corresponding to X (2), but being located in a single video signal source line (4) above said pixel corresponding to X (2), and bottom[1] to bottom[5] (5₁ to 5₅) are pixel values of pixels being located in the same temporal video signal source field (1) as that of said pixel corresponding to X (2), but being located in a single video signal source line (6) below said pixel corresponding to X (2), wherein top[1] to top[5] (3₁ to 3₅) and bottom[1] to bottom[5] (5₁ to 5₅) are centered in top[3] (3₃) and bottom[3] (5₃), respectively, top[3] (3₃) and bottom[3] (5₃) being connectable via a single column line (7) also connecting said pixel corresponding to X (2).

9. Method according to claim 7, **characterized in that** said median filter process and said pixel matching process are given by the following algorithm:
N = MM5(top[1], bottom[1], top[2], bottom[2], top[3], bottom[3], top[4], bottom[4], top[5], bottom[5], prev, next),
wherein the function MM5(a[1], b[1], a[2], b[2], a[3], b[3], a[4], b[4], a[5], b[5], prev, next) is given by:
a) MM5(...) = Median(prev, next, a[3], b[3], 0.5 · (a[2]+b[4]) if D1 = min(D1, D2, D3)
b) MM5(...) = Median(prev, next, a[3], b[3], 0.5 · (a[3]+b[3]) if D2 = min(D1, D2, D3)
c) MM5(...) = Median(prev, next, a[3], b[3], 0.5 · (a[4]+b[2]) if D3 = min(D1, D2, D3),
with
d) D1 = |a[1]-b[3]| + |a[2]-b[4]| + |a[3]-b[5]|
e) D2 = |a[2]-b[2]| + |a[3]-b[3]| + |a[4]-b[4]|
f) D3 = |a[3]-b[1]| + |a[4]-b[2]| + |a[5]-b[3]|,
wherein N (12) is a pixel value of a pixel to be determined, top[1] to top[5] (3₁ to 3₅) are pixel values of pixel being located in the same temporal video signal source field (8) as that of said pixel corresponding to N (12), but being located in a single video signal source line (4) above said pixel corresponding to N (12), and bottom[1] to bottom[5] (5₁ to 5₅) are pixel values of pixels being located in the same temporal video signal source field (8) as that of said pixel corresponding to N (12), but being located in a single video signal source line (6) below said pixel corresponding to N (12), wherein top[1] to top[5] (3₁ to 3₅) and bottom [1] to bottom [5] (5₁ to 5₅) are centered in top [3] (3₃) and bottom[3] (5₃), respectively, top[3] (3₃) and bottom[3] (5₃) being connectable via a single column line (7) also connecting said pixel corresponding to N (12), wherein prev (11) is a pixel having the same spatial coordinates as those of said pixel corresponding to N (12), and is located in a video signal source field (12) temporarily preceding that which contains said pixel corresponding to N (12), next (13) is a pixel having the same spatial coordinates as those of said pixel corresponding to N (12), and is located in a video signal source field (9) temporarily succeeding that which contains said pixel corresponding to N (12).
